# EUROPEAN PATENT SPECIFICATION

(11) **EP 0 740 774 B1**
(45) Date of publication and mention of the grant of the patent: **28.04.1999**
(21) Application number: 95911562.7
(22) Date of filing: 17.01.1995
(51) Int. Cl.: G01C 21/00

(54) **COVERT FLIGHT DATA PROCESSOR**
DATENPROZESSOR FÜR GEHEIMFLÜGE
PROCESSEUR DE DONNEES DE VOL DISCRET

(30) Priority: 18.01.1994 US 182898
(43) Date of publication of application: 06.11.1996
(73) Proprietor: HONEYWELL INC., Minneapolis Minnesota 55408 (US)
(72) Inventor: DEIS, David, L., Corrales, NM 87048 (US); GJULLIN, Robert, M., Corrales, NM 87048 (US); THORPE, Douglas, E., Albuquerque, NM 87123 (US)
(74) Representative: Rentzsch, Heinz, Dipl.-Ing.
(86) International application number: US9500644
(87) International publication number: WO9519543

(56) References cited:
- EP-A- 0 197 754
- EP-A- 0 341 645
- DATABASE INSPEC INSTITUTE OF ELECTRICAL ENGINEERS, STEVENAGE, GB Inspec No. 2372074, DISSANAYAKE T B ET AL 'Real-time management of strategic penetrator missions' & PROCEEDINGS OF THE IEEE 1984 NATIONAL AEROSPACE AND ELECTRONICS CONFERENCE. NAECON 1984 (IEEE CAT. NO. 84CH2029-7), DAYTON, OH, USA, 21-25 MAY 1984, 1984, NEW YORK, NY, USA, IEEE, USA, pages 1308-1312 vol.2,
- DATABASE INSPEC INSTITUTE OF ELECTRICAL ENGINEERS, STEVENAGE, GB Inspec No. 4000007, YOUNG R ET AL 'Integration of terrain elevation and feature data for tomorrow's cockpits' & PROCEEDINGS. IEEE/AIAA/NASA 9TH DIGITAL AVIONICS SYSTEMS CONFERENCE (CAT. NO.90CH2929-8), VIRGINIA BEACH, VA, USA, 15-18 OCT. 1990, 1990, NEW YORK, NY, USA, IEEE, USA, pages 525-528,
- DATABASE INSPEC INSTITUTE OF ELECTRICAL ENGINEERS, STEVENAGE, GB Inspec No. 2371001, KUPFERER R A ET AL 'Tactical flight management-survivable penetration' & PROCEEDINGS OF THE IEEE 1984 NATIONAL AEROSPACE AND ELECTRONICS CONFERENCE. NAECON 1984 (IEEE CAT. NO. 84CH2029-7), DAYTON, OH, USA, 21-25 MAY 1984, 1984, NEW YORK, NY, USA, IEEE, USA, pages 503-509 vol.1,

## Description

### REFERENCE TO GOVERNMENT CONTRACT

The United States Government has rights in this invention pursuant to Contract NO. F33600-88-G-5107, awarded by the Department of the Air Force.

### RELATED APPLICATIONS

The present application relates to co-pending U.S. patent applications including U.S. Patent Application Serial No. 08/183,090, entitled DEVICE EXECUTING INTERVISIBILITY CALCULATION, filed 18 January 1994; U.S. Patent Application Serial No. 08/183,533, entitled INTERVISIBILITY ALGORITHM, filed 18 January 1994; U.S. Patent Application Serial No. 08/184,071, entitled OPTIMIZED RADIAL SCAN TECHNIQUE, filed 18 January 1994; U.S. Patent Application Serial No. 08/183,533, entitled TERRAIN ELEVATION DATABASE CONVERGENCE MODEL, filed 18 January 1994; U.S. Patent Application Serial No. 08/183,531 entitled TERRAIN ELEVATION PATH MANAGER, filed 18 January 1994; U.S. Patent Application Serial No. 08/182,894, entitled LOW LEVEL FLIGHT FLYABILITY TRANSFORMATION OF DIGITAL TERRAIN ELEVATION DATA, filed 18 January 1994; and U.S. Patent Application Serial No. 08/182,891, entitled TRANSFORMATION OF DIGITAL TERRAIN ELEVATION DATA TO REVEAL AREAS OF LOW OBSERVABILITY, filed 18 January 1994.

### BACKGROUND OF THE INVENTION

The present invention relates generally to apparatus for aircraft control, and particularly to aircraft control in the context of covert flight.

The goal of covert flight is to travel into hostile territory without being detected. Detection is failure of the mission. Aircraft typically include a variety of electronic support measures to aid in covert flight.

Aircraft functions required to support a covert flight missions have evolved as separate apparatus and procedures. Generally covert flight functions include navigation and position determination (NAV), terrain following (TF), terrain avoidance (TA), obstacle avoidance (OA), threat avoidance (ThA), digital map displays, digitized chart displays, perspective view ridgeline displays, and displays showing relative elevation versus log rhythmic distance. Write such functions have been employed generally in distributed fashion to provide appropriate information to the aircraft crew, thereby enabling the crew to react to the available information and/or employ the available functions, such distributed and disjoint covert mission flight functions require substantial contribution by the aircraft work crew to make full use of the available information and covert flight functions.

A relevant reference is European Patent Application 0 341 645, which discloses a digital map system used for navigation of an aircraft. Using a digital terrain database, a pilot is able to view the relative position of the aircraft with respect to the surrounding terrain.

Another reference is IEEE 1984 National Aerospace and Electronic Conference, vol. 2, article entitled, "Real-Time Management of Strategic Penetrator Missions" by Dissanayake and Perras Jr., published May 21-25, 1984, which discloses a mission management system which takes into account known and unknown threats and provides threat avoidance information. The mission management system analyzes a particle section of the terrain database, and for that area provides course alternatives for the aircraft to avoid detection.

The final reference is, the IEEE 1984 National Aerospace and Electronic Conference, vol. 1, article entitled, "Tactical Flight Management - Survivable Penetration," by Kupferer and Halski published on May 21-25, 1984, discloses system which employs a terrain database to enhance aircraft survivability. Using a section of the terrain database, an analysis is made for aircraft survivability based on known and detected threats.

The subject matter of the present invention addresses the distributed nature of covert flight mission functions and information flow and provides an improved architecture for integration of such information and functions as applied to covert flight missions.

### SUMMARY OF THE INVENTION

In accordance with a preferred embodiment of the present invention, a covert flight data processor integrates covert mission related aircraft function and control within an architecture supporting data exchange and calculation in support of covert mission support measures. In accordance with the preferred form of the present invention, the covert flight data processor interacts with an aircraft generally by means of an aircraft bus. The flight data processor accepts status information from the aircraft and returns status information and, steering commands to guide the aircraft through covert flight while concurrently displaying to the aircraft pilot a variety of covert flight related displays. By closely integrating the various covert mission functions, and providing dedicated data pathways therebetween according to the requirements of covert flight function interaction, overall efficiency is improved. The covert flight data processor of the present invention couples together display functions with other functions utilizing massive volumes of supporting data such as intervisibility calculations, mission reroute planning, and integrated navigational systems. As a result, the collective covert flight functions, as specifically interconnected under the present invention, provide covert flight support exceeding that prior solutions to cover electronic covert flight support measures. The individual covert flight components operate to their fullest extent by having direct access to large volumes of data and dedicated data pathways to interact directly with other covert flight functions. Overall, covert flight performance is improved relative to a less integrated design approach.

Because the overall performance of a covert flight data processor in accordance with the present invention is improved, faster and more accurate, the pilot is more likely to return home.

The subject matter of the present invention is particularly pointed out and distinctly claimed in the concluding portion of this specification. However, both the organization and method of operation of the invention, together with further advantages and objects thereof, may best be understood by reference to the following description taken with the accompanying drawings wherein like reference characters refer to like elements.

### BRIEF DESCRIPTION OF THE DRAWINGS

For a better understanding of the invention, and to show how the same may be carried into effect, reference will now be made, by way of example, to the accompanying drawings in which:

FIG. 1 illustrates the architecture of a covert flight data processor according to a preferred embodiment of the present invention.

FIG. 2 is a data flow diagram illustrating an integrated navigational function.

FIG. 3 is a data flow diagram illustrating a terrain following and obstacle avoidance function applied to vertical aircraft control.

FIG. 4 is a data flow diagram illustrating a threat avoidance and terrain avoidance function applied to lateral aircraft control.

FIG. 5 is a data flow diagram illustrating a digital map display function.

FIG. 6 is a data flow diagram illustrating a ridgeline display function.

### DETAILED DESCRIPTION OF THE PREFERRED EMBODIMENT

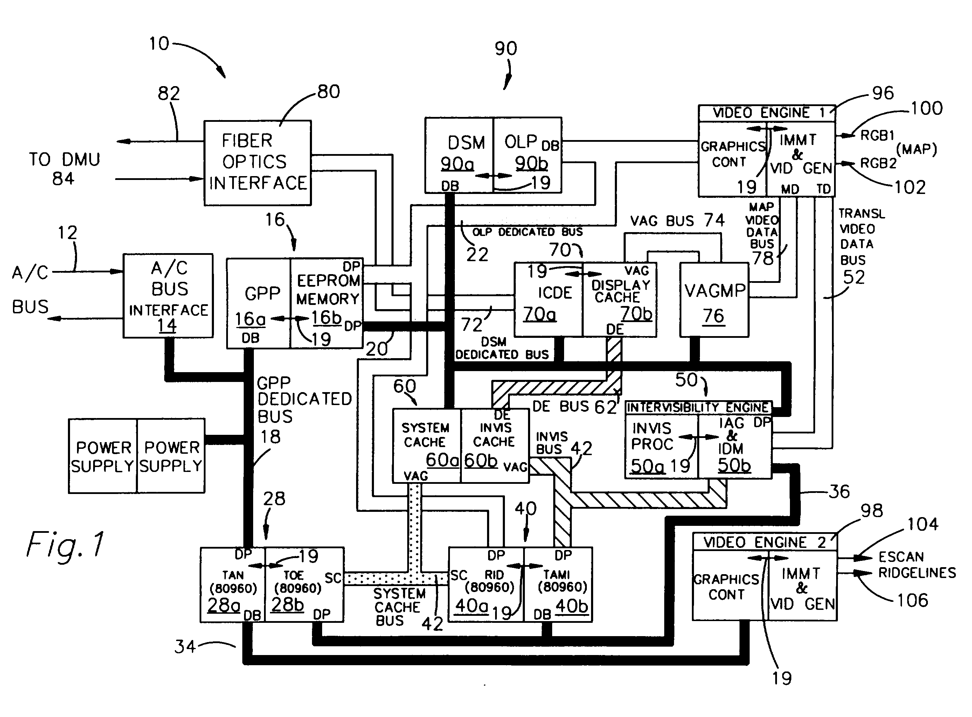

FIG. 1 illustrates in block diagram the architecture of a covert flight data processor according to a preferred embodiment ofthe present invention. The processor 10 includes a collection of hardware blocks interconnected by a collection of buses each interconnecting selected ones of the blocks. This arrangement provides robust connectivity between specific covert flight functions and supports an integrated overall covert flight mission control scheme. Covert flight functions work together to provide maximum system performance and greater mission success rates by promoting less chance of detection, more effective evasive maneuvers and faster evasive reaction times. Thus, functionality required for successful and effective covert missions is improved by integrating such functions as described herein.

Generally, the integrated covert flight mission architecture brings together a collection of navigational and flight control and display functions into an integrated system Including radar altimeter (RALT), inertial navigational unit (INU), global positioning system (GPS), and terrain aided navigation (TAN).
Furthermore, the device extends its control to aircraft sensors in support of covert flight functions, e.g., activate radar or ladar devices to confirm local terrain conditions in anticipation of flight maneuvers.

The integrated data flight data processor of the present invention provides a fusion of digital terrain elevation data (DTED) and active sensor data, making the system less reliant on any one source of flight information. Low level terrain following (TF), terrain avoidance (TA), and obstacle avoidance (OA) functions are integrated into the data processor to provide lateral and vertical aircraft steering commands. The system also integrates real time threat avoidance procedures based on intervisibility calculations, translucent display functions, and automated mission replan functions. The system makes available to the pilot and work crew digital and digitized map displays for more effective flight operations. Also, a perspective view ridgeline and a terrain following displays are provided as part of the integrated data processor. Such integration is accomplished generally by interconnecting the various processing and resource components by a system of bus structures whereby an efficient and effective overall covert flight data processor results.

The illustration of FIG. 1 shows generally the arrangement of a bus system and associated cards inserted therein. In some cases, a card is bifurcated into left and right subblocks denoted by sub-scripts "a" and "b" relative to the reference numeral applied to the card generally. Such cards including left and right sub-blocks are double-sided surface mount circuit cards. Generally, constructing the various cards as separate sub-blocks on opposite sides of surface mount cards conserves overall space required for the processor 10. In some instances, the left and right sub-blocks have little logical relationship and are merely mounted on a common physical card. In other cases, however, the left and right sub-blocks are intimately connected and include various communication and control channels therebetween illustrated as double-headed arrows 19 in FIG. 1. For example, and as will be described more fully hereafter, a cache memory card 60 includes a system cache 60a and an intervisibility cache 60b with no significant direct relationship therebetween other than sharing the card 60. In other cases, e.g., video engines 96 and 98 and the intervisibility engine 50, the card sub-blocks have significant inter-relationship in execution ofthe associated card functions.

The various buses indicated in FIG. 1 are of the same physical character and protocol, but differ with respect to the interconnections provided among the various cards of processor 10. The bus arrangement employed in processor 10 uses dual port memory as a mechanism for communication between devices operating on a given bus, i.e., able to read and write the same memory resource. For example, the general purpose processor (GPP) 16a has a dedicated bus (DB) port applied to the GPP dedicated bus 18 and the terrain aided navigation (TAN) precursor 28a as a dual port (DP) coupled to GPP dedicated bus 18. General purpose processor 16a can deposit information into the dual port memory of TAN processor 28a, and also retrieve information from the dual port memory of TAN processor 28a, i.e., retrieve calculation results provided by TAN processor 28. Accordingly, the indicia "DB" indicates a dedicated bus port and the indicia "DP" indicates a dual port memory.

Data processor 10 interacts generally with the aircraft by way of aircraft bus 12 through an aircraft bus interface block 14. Items received from aircraft bus 12 via interface block 14 include indication of aircraft status position, aircraft velocity, and aircraft attitude. A variety of pilot or cockpit commands arrive at processor 10 by way of aircraft bus 12. Pilot command information such as digital map display scale, monochrome versus color display, and various other signals relevant to displaying overlay information on the flight display are delivered to processor 10 by way ofbus 12.

Another item provided to processor 10 by way of aircraft bus 12 is threat information. For example, aircraft sensors may indicate a new threat detection and deliver threat position and range capability to processor 10 by way of aircraft bus 12. As will be explained more fully hereafter, processor 10 then provides appropriate support and control procedures for initiating an intervisibility calculation relative to the detected threat. An intervisibility calculation is a method for analyzing digital terrain elevation data to determine flight routes obscured from view by a threat installation due to local terrain masking. Potentially, a mission route replan taking advantage of the calculated intervisibility solution may be invoked by processor 10 to successfully evade the detected threat.

Flight processor 10 delivers information to the aircraft generally by placing values on aircraft bus 12 by way of aircraft bus interface block 14. For example, data processor 10 continuously maintains information regarding current aircraft position and delivers such information to the aircraft bus 12. More particularly, the aircraft may include several navigational devices each maintaining indication of aircraft position, e.g., an inertial navigation unit (INU) and a global positioning system (GPS). All such navigational devices do not, however, exactly agree on aircraft position. To provide the pilot with the best informed indication of aircraft position, all such sources of aircraft position information are brought together in processor 10 to provide a consensus as to aircraft position based on the spectrum of information sources. This consensus aircraft position is an item delivered to bus 12 by way of aircraft bus interface block 14. Other information delivered to bus 12 by processor 10 includes status information indicating normal or abnormal operation of devices constituting processor 10, e.g., failure detection and reporting.

Also, processor 10 delivers to aircraft bus 12 steering commands resulting from automated terrain following and threat avoidance algorithms executed by processor 10. Generally, a lateral steering process produces right and left turning commands, e.g., obstacle or threat avoidance, while a vertical steering process produces climb and dive angle commands, e.g., low level terrain following commands. Thus, data processor 10, by way of aircraft bus 12, can affect the flight of the aircraft by interjecting flight steering commands onto aircraft bus 12.

Card 16 includes general purpose processor (GPP) 16a and an EEPROM memory 16b. General purpose processor 16a serves primarily as a data manager with respect to aircraft bus interface block 14. Aircraft bus interface block 14 ties directly to the GPP dedicated bus 18. GPP 16a gets data from aircraft bus interface block 14 and delivers data to the various components of processor 10. More particularly, GPP 16a is coupled by card 16 internal communication channels directly to EEPROM memory 16b. By way of EEPROM memory block 16b, GPP 16a interacts with a variety of other cards of processor 10. For example, the GPP 16a interacts with other components through the dual port (DP) memory of EEPROM memory 16b. GPP 16 might take positional information coming from the inertial navigation unit (INU) or from the global positioning system (GPS), each originating from aircraft bus 12, and deposit that information in the dual port (DP) memory of the TAN processor 28a. In response, TAN processor 28a executes necessary processing and deposits a result back into its dual port (DP) memory. GPP block 16a obtains the result by way of GPP dedicated bus 18. Similarly, GPP 16a interacts with the display stream manager (DSM) 90a of card 90 and with the overlay processor (OLP) 90b of card 90 by way of the DSM dedicated bus 20 and the OLP dedicated bus 22, respectively. GPP 16a is coupled at its DB port to a GPP dedicated bus 18.

EEPROM memory block 16b is coupled at its DP port to DSM dedicated bus 20 and to OLP dedicated bus 22. In addition to serving as a mechanism for information exchange among various components of processor 10, EEPROM memory 16b serves as a memory resource for several processors found in flight data processor 10. In particular, each of the components GPP 16a, DSM 90a, and OLP 90b constitute an independent microprocessor. Each of the processors of blocks 16a, 90a, and 90b access the EEPROM memory 16b either directly, in the case of the processor of block 16a, or by way of an associated dedicated bus and dual port memory communication mechanism in the case of blocks 90a and 90b. Accordingly, EEPROM memory 16b serves as the program memory resource and scratch pad memory resource for each of the processors of blocks 16a, 90a and 90b.

Card 28 includes a terrain aided navigation (TAN) processor 28a and a terrain following, obstacle avoidance, and scan display (TOE) processor 28b. TAN processor 28a drives at its DB port a TAN bus 34. Card 40 includes a route and intervisibility display (RID) processor 40a and a terrain avoidance and mission planning (TAMI) processor 40b. RID processor 40a is coupled to a system cache bus 42 and to the OLP dedicated bus 22. TAMI processor 40b drives at its DB port the TAMI bus 36 and connects also to an intervisibiltty bus 42. TOE processor 28b is coupled at its DP port to the TAMI bus 36 and to the system cache bus 42.

Card 50 includes an intervisibility processor 50a and an intervisibility address generator (IAG)/intervisibility display memory (IDM) 50b. IAG/IDM 50b is coupled to the intervisibility bus 42, the bus 36, a video data bus 52, and the DSM dedicated bus 20. Cache memory card 60 includes a system cache 60a coupled to system cache bus 42 and coupled to DSM dedicated bus 20. Cache memory card 60 further includes an intervisibility cache 60b is coupled to the intervisibility bus 42 and to a decompression engine (DE) bus 62.

Intervisibility engine 50 executes terrain-masked intervisibility functions relative to known or discovered threat installations. More particularly, system cache 60a contains high resolution digital terrain elevation data (DTED), e.g., at 100 meter post spacing. Intervisibility cache 60b obtains a translated lower resolution version of the DTED data surrounding a given threat, e.g., at 800 meter post spacing. Route planning and intervisibility calculations are then executed against the lower resolution DTED data found in intervisibility cache 60b. Intervisibility engine 50 obtains DTED data by way of the intervisibility address generator of block 50, which in turn accesses the intervisibility cache 60b by way of intervisibility bus 42. Generally, the intervisibility address generator of card 50 produces addresses for data post elevation data (DTED) surrounding the identified threat, e.g., data post elevations taken from a circular region corresponding to the threat range capability. Intervisibility processor 50a thereby has access to a collection of digital elevation terrain data relative to a given threat, and may execute an intervisibility calculation against that terrain to identify flight paths obscured from view of the threat as a basis for selecting covert routes. The intervisibility results are written into the intervisibility cache 60b for potential mission route replan or for video display. The intervisibility display memory (IDM) portion of card 50, for example, receives data representing flight routes obscured from threat view by employing the intervisibility address generator (IAG) of card 50 to retrieve data from intervisibility cache 60b. In turn, the intervisibility display memory (IDM) provides this data, via translucent video data bus 52, to video engine 96 for pilot viewing.

An interface controller and decompression (ICDE) block 70a couples to the DSM dedicated bus 20 and to an optics bus 72. Interface controller and decompression (ICDE) block 70a receives information collected from a digital memory unit (DMU) 84 ICDE 70a interacts with the digital memory unit 84 by way of fiber optics interface 80 and bus 72. DSM processor 90, interacting with ICDE 70a by way of the DSM dedicated bus 20, produces requests for display data by way of ICDE 70a. For example, DSM processor 90a may request a given block of data from the DMU 84 as specified by a given address and block size. The ICDE 70a is then responsible for interacting with the digital memory unit 84 to obtain the requested data. The resulting data may be in compressed form, requiring the ICDE 70a to execute a decompression function relative thereto, or may be delivered directly to the display cache 70b. Information obtained by the ICDE 70a can be delivered by ICDE 70a to either the DSM processor 90a or one of three memory caches, i.e., to one of system caches 60a, intervisibility cache 60b, or display cache 70b. Generally, ICDE block 70a has good connectivity to a variety of blocks, either directly or indirectly, of data processor 10. The map data goes to the three caches 60a, 60b, and 70b while general files, such as threat and route files, go to the DSM 90a.

A display cache 70b of card 70 interconnects directly with the video address generator (VAG)/video processor (VP) block 76. As may be appreciated, display cache 70b holds data in preparation for delivery to video processing and image rendering components of covert flight data processor 10.

Video address generator (VAG)/video processor (VP) 76 couples to the DSM dedicated bus 20, the VAG bus 74 and to a video data bus 78. The video address generator (VAG) portion generates appropriate address values to obtain display data from display cache 70b by way of VAG bus 74. The video processor (VP) portion of block 76 augments the data obtained from display cache 70b by, for example, adding sun angle shading enhancement, i.e., appearance of the displayed terrain as if the sun were illuminating the area at a given angle. Additional display enhancements provided by the video processor (VP) portion include elevation color banding which is a distinction in color between items above the aircraft altitude and items below the aircraft altitude. Once the display data has been appropriately augmented by the video processor portion of block 76, block 76 delivers the data by way of map video data bus 78 to video engine 96 for integration with other display data, such as intervisibility data, and presentation upon a video display device.

A fiber optics interface block 80 communicates by way of optics bus 72 with processor 10, and by way of communication link 82 with digital memory unit (DMU) 84 residing external of processor 10. In the preferred embodiment of the present invention, the digital memory unit (DMU) 84 is an optical disk By using optical fiber to link fiber optics interface 80 with digital memory unit 84, unit 84 may be located some distance from data processor 10. Accordingly, the connection between the devices is smaller, lighter, and more reliable.

Processor 10 employs two video engines, individually video engine 96 and video engine 98. Video engine 96 is coupled to the video data buses 52 and 76 and also to the OLP dedicated bus 22 to produce map displays by way of RGB 1 display signal 100 and RGB2 display signal 102. RGB display signals 100 and 102 are, in the preferred embodiment of the present invention, identical images made available for separate display devices of the aircraft. Generally, video engine 96 produces map displays based on a variety of information. For example, the intervisibility translucent overlay generated by intervisibility engine 50 arrives by way of translucent video data bus 52, additional overlay information originating from the overlay processor (OLP) 90b arrives by way of the OLP dedicated bus 22, and the video processor portion of card 76 delivers additional map data, i.e., enhanced display maps, by way of map video data bus 78. Video engine 96 then executes the task of rendering the collected display data and presenting the rendition in the video signals 100 and 102, i.e., video engine 96 converts the line drawing commands, into a bit map image, i.e., converts the line drawing commands into pixel images which are combined with the other sources of video data for presentation in a single video image.

Video engine 98 couples to TAN bus 34 and produces scan displays by way of display signal 104 and ridgeline displays by way of rigid display signal 106.

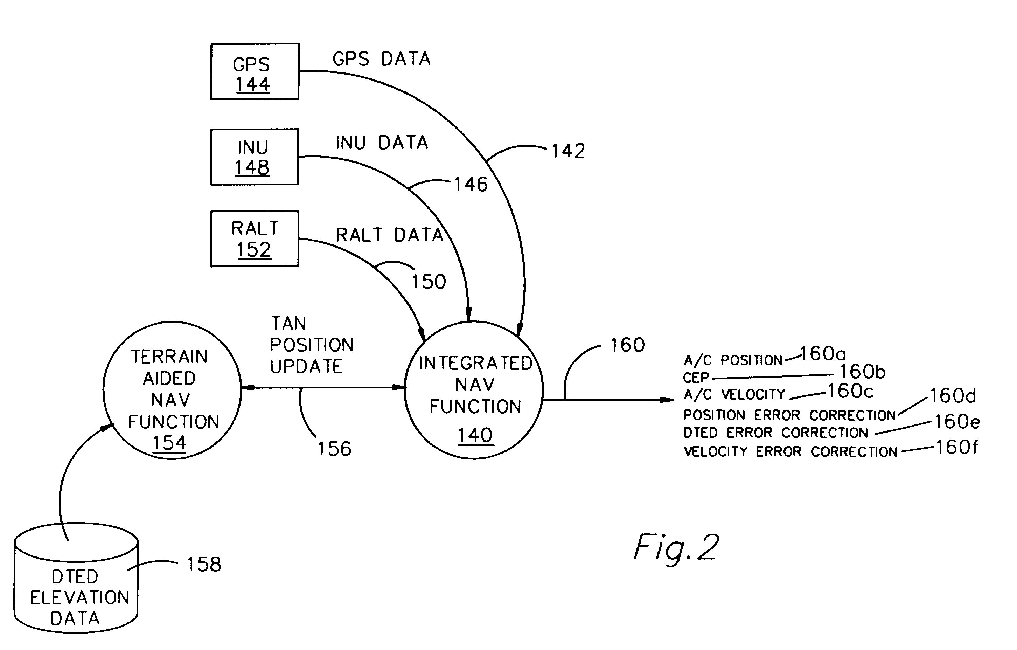

As may be appreciated, the architecture portrayed in FIG. 1 provides a comprehensive collection of hardware and software resources specifically interconnected to accomplish the primary task of electronic support in aid of covert flight missions. FIGS. 2-6 illustrate by data flow diagram the movement of data among the resources illustrated in FIG. 1 in implementation of covert flight mission support. In most cases, the movement of data from one resource to another is by dedicated bus interconnecting those resources. In several cases, however, some resources are used to pass information therethrough when a dedicated bus is not provided by the architecture in place. Generally, however, interconnections between the covert flight functions are direct when necessary to promote more efficient and accurate results.

FIG. 2 illustrates data flow relative to an integrated navigation (NAV) function 140. In FIG. 2, integrated NAV function 140 receives a variety of positional information from the aircraft bus 12 including GPS data 142 from a global position system block 144, INU data 146 from an inertia navigational unit 148, and RALT data 150 from a radar altimeter block 152. Global position system block 144 receives positional information by way of satellite broadcast. Inertial navigation unit (INU) 148 calculates position based on traditional gyroscopic principals. Radar altimeter block 152 establishes current altitude based on radar measurements.

Integrated (NAV) function 140 also interacts with a terrain aided navigation (TAN) function 154 to establish a terrain aided navigation position update 156. Terrain aided navigation function 154 accesses a digital terrain elevation data resource 158 representing terrain features in the vicinity of the aircraft. Integrated NAV function 140 compares the indicated local terrain information with the GPS data 142, INU data 146, RALT data 150, and TAN position data 156 to establish with a given degree of certainty the current aircraft position. Integrated NAV function 140 deliver aircraft data 160 including aircraft position 160a showing current aircraft position, CEP 160b indicating a circular area of probable aircraft location relative to aircraft position 160a, aircraft velocity 160c, position error correction 160d, DTED error correction 160e, and velocity error correction 160f.

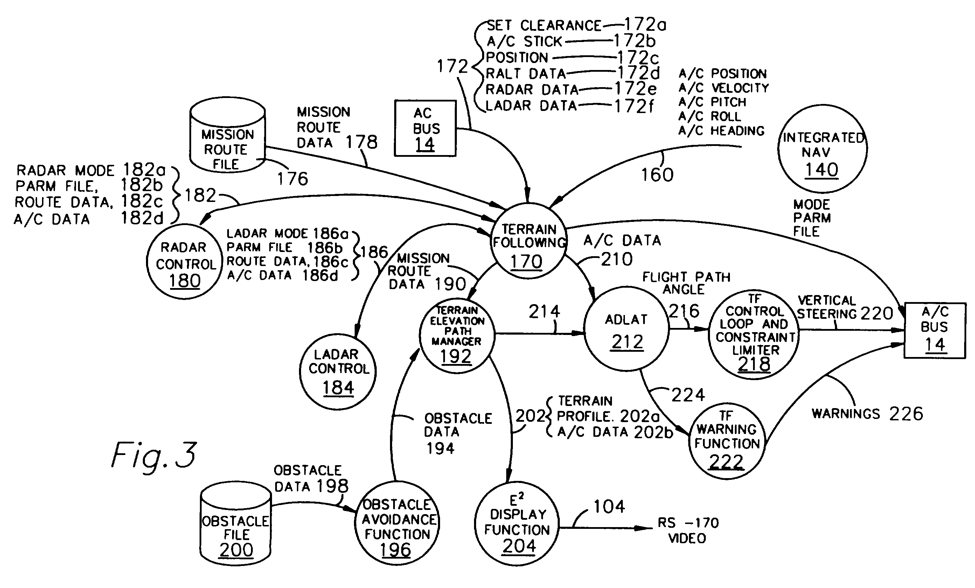

FIG. 3 is a data flow diagram showing terrain following and obstacle avoidance activity in implementation of vertical aircraft control functions. In FIG. 3, integrated nav function 140 provides aircraft data 160 to terrain following function 170. Terrain following function 170 also interacts with aircraft bus interface block 14 to receive aircraft data 172 including a set clearance datum 172a, an aircraft stick datum 172b, a position datum 172c, an RALT datum 172d, a radar datum 172e, and a ladar datum 172f. Terrain following function 170 accesses a mission route file 176 to receive mission route data 178. A radar control function 180 interacts with terrain following function 170 exchanging data 182 including radar mode 182a, parameter file 182b, route data 182c, and aircraft data 182d. Similarly, ladar control function 184 interacts with terrain following function 170 exchanging data 186 including ladar mode 186a, parameter file 186b, route data 186c, and aircraft data 186d.

Terrain following function 170 delivers mission route data 190 to a terrain elevation path manager 192. Terrain elevation path manager 192 also receives obstacle data 194 from an obstacle avoidance function 196. Obstacle avoidance function 196 receives obstacle data 198 from an obstacle file 200. Terrain elevation path manager 192 delivers data 202 including terrain profile data 202a and aircraft data 202b, to a display function 204. Display function 204 produces video signal 104 (206) representing the generated scan display.

Terrain following function 170 delivers aircraft data 210 to an advanced low altitude techniques (ADLAT) function 212. ADLAT function 212 also receives terrain profile data 214 from terrain elevation path manager 192. Flight path angle data 216 produced by ADLAT function 212 is delivered to a terrain following control loop and constraint limiter function 218 which, in turn, produces vertical steering commands 220 for placement on the aircraft bus 12 by way of interface block 14.

The aircraft may be flying along a given route, but a turn maneuver may be proposed either by the pilot or by the existing flight plan. In response, the terrain following function 170 instructs radar control 180 to look into that turn to view along the proposed path. Based on the mission route file 176, radar and ladar commands are delivered to radar control function 180 and ladar control function 184 to investigate the terrain along the proposed path. The obstacle file 200 provides obstacles that may lie along that given path and, together with the indicated terrain, the terrain elevation path manager 291 puts the collected data together and produces a profile of the terrain that lies along the proposed route. At this point, a display is generated based on the produced terrain profile, i.e., the scan display provided by display function 204.

The advanced low altitude techniques (ADLAT) function 212 uses the profile data produced by terrain elevation path manager, i.e., as provided in data 214, to produce the flight path angle 216, i.e., a vector indicating the required flight climb or dive angle required to accomplish the proposed flight path, i.e., avoid obstacles or terrain features or threat installations. The terrain following control loop and constraint limiter 218 compares the required flight path angle to the actual flight path angle and produces, if necessary, an appropriate vertical steering command 220 to establish the required flight path angle as indicated by flight path angle 216. Once the required vertical steering command 220 is generated, it is placed on the aircraft bus 12 by way of interface block 14.

A terrain following warning function 222 receives status data 224 from ADLAT function 212 and generates warning commands 226 for delivery to aircraft bus 12 by way of interface block 14. The terrain following warning function 222 produces several types of warnings. For example, if insufficient data is available to provide a valid steering command 220, then warning function 222 indicates no valid steering command is available and that the pilot needs to invoke a manual steering command if necessary. Another warning produced by terrain following warning function222 indicates to the pilot when the aircraft has deviated a given distance from the proposed flight path. Generally, the warnings 226 applied to aircraft bus 12 by terrain warning function 222 relate to the status or confidence level of the commands applied to the aircraft by flight data processor 10.

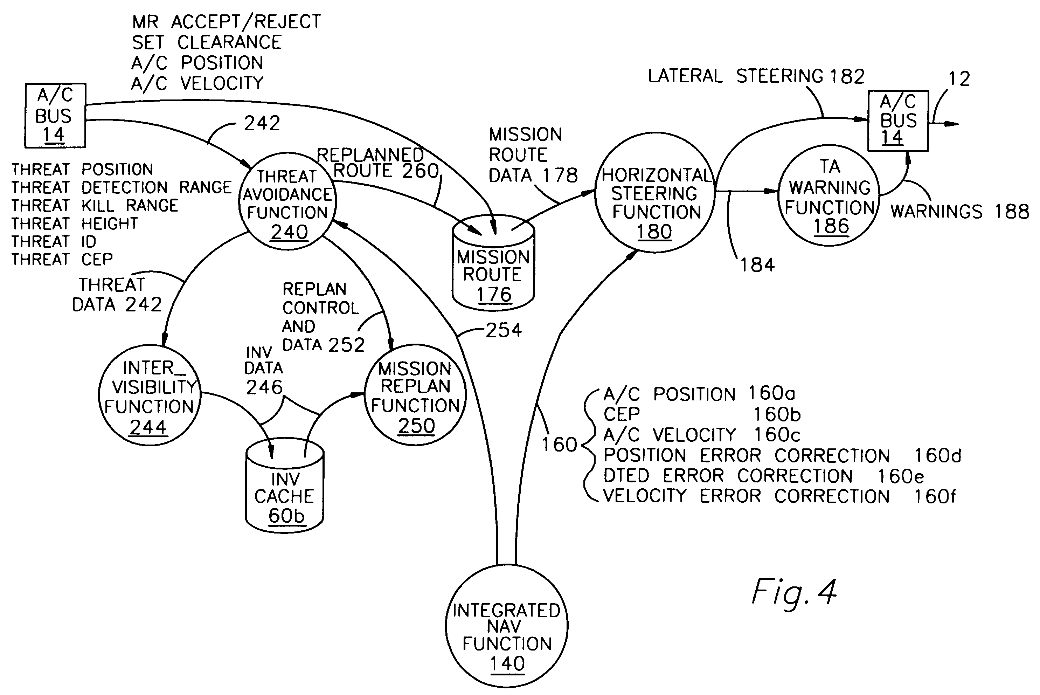

FIG. 4 illustrates data flow relative to lateral steering functions and operations in response to threat detection and avoidance. In FIG. 4, a threat avoidance function 240 receives threat data 242 from aircraft bus interface block 14. Threat avoidance function 240 delivers threat data 242, or a portion thereof, to an intervisibility function 244. Intervisibility function 244 in turn produces intervisibility data 246 and writes the intervisibility data 246 into the intervisibility cache 60b. Intervisibility data 246 is taken from cache 60b by a mission replan function 250. Mission replan function 250 interacts with the threat avoidance function 240 to establish a replan control and data product 252. Threat avoidance function 240 also has available navigation data 254 from integrated NAV function 140 and can produce, if necessary, a replanned route command 260 for delivery to mission route file 176.

A horizontal steering function 180 receives mission route data 178 and produces, when necessary, lateral steering commands 182 for delivery to aircraft bus 12 by way of interface block 14. Horizontal steering function 180 also produces status data 184 for delivery to a terrain avoidance warning function 186 which, in turn, produces warning commands 188 for delivery to aircraft bus 12 by way of interface block 14. Integrated NAV function 140 delivers to horizontal steering function 180 aircraft data 160.

Accordingly, the operations indicated in FIG. 4 may be executed in selection of a mission replan in response to detection of a given threat, e.g., a threat just detected by the aircraft sensor data. Aircraft bus 12 provides such information as threat position, threat detection range, threat kill range, and threat height. If a new threat is detected or a need exists to follow a path not part of the established mission route, the threat avoidance function 240 invokes an intervisibility calculation by providing the threat data 242 to the intervisibility function 244. The results of the intervisibility function are placed in the intervisibility cache 60b. The mission replan function 250 then makes use of the modified data of the intervisibility cache 60b to provide replan control and data 252 to the threat avoidance function 240. The newly calculated or replanned route 260 is then delivered to the mission route file 176 for use by the horizontal steering function 180 in implementing the new flight route, i.e., executing left and right turns as necessary to maintain the aircraft on the current mission route. As may be appreciated, the integrated NAV function 140 constantly provides aircraft data 160 to both the threat avoidance function 240 and the horizontal steering function 180 for completion ofthose two functions.

When a new threat is detected, and that threat requires a mission route replan, flight data processor 10 can quickly calculate intervisibility relative to the threat and establish a new flight path avoiding the newly detected threat. Generally, flight data processor 10 can collect such information as the elevation set clearance and threat locations to calculate a new or replanned mission route. By placing this new mission route in the mission route file 176, the aircraft begins following the replanned mission route to avoid the detected threat.

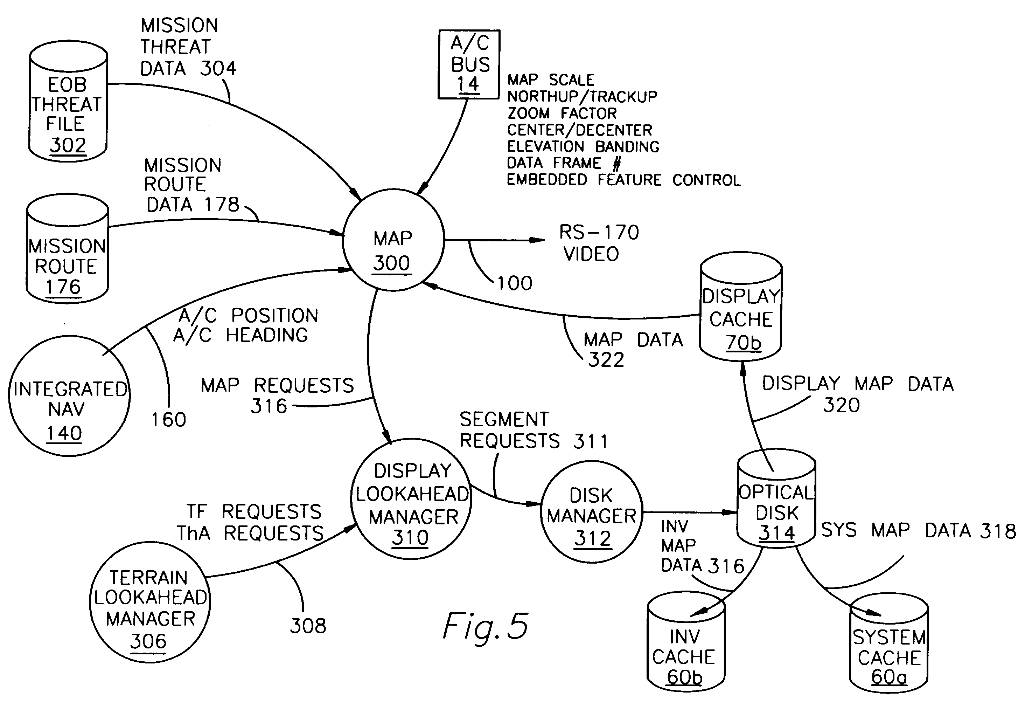

FIG. 5 is a data flow diagram illustrating a digital map function 300. Generally, the process indicated in FIG. 5 collects data such as the mission threat data 304 as obtained from the electronic order of battle threat file 302, the mission route data 178 as provided by the mission route file 176, and the aircraft position and heading data of aircraft data 160 as provided by the integrated NAV function 140. Control information originating from aircraft bus 12 dictates map display by providing such control or command information as map scale, map tracking, map zoom, map center, elevation banding commands, data frame numbers and imbedded feature control. Generally, the data originating from aircraft bus 12 represents pilot commands influencing the production and rendering ofmap displays.

A display look ahead manager 310 collects data in advance of display and deposits that data into the display cache memory 70b for more rapid access and accurate map display. A terrain look ahead manager 306 supports the display look ahead manager 310 by providing terrain following requests and threat avoidance request data 308 for the same area as the display cache 70b. Based on the anticipated flight route and aircraft position, as represented by map request data 316 provided by map function 300 to display look ahead manager 310, display look ahead manager 310 issues segment requests 311 to a disk manager 312. In turn, disk manager 312 accesses the digital memory unit (DMU) 84, illustrated as the optical disk 314 in FIG. 5, to collect the requested data and deposit that data in such cache memories as the intervisibility cache 60b, system cache 60a, and display cache 70b. Map data 322 is available to map function 300 when needed to produce the video signal 324 ultimately appearing as an image in the RGB signals 100 and 102.

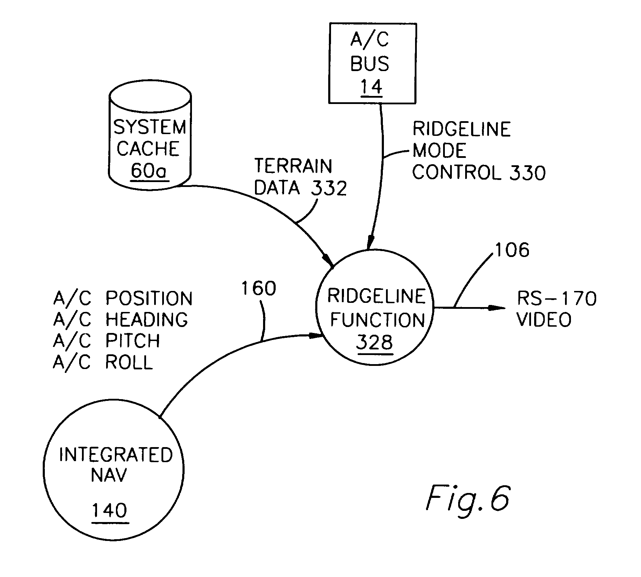

FIG. 6 is a data flow diagram illustrating a ridgeline function 328 responsible for producing the ridgeline video signal 106. Aircraft bus interface block 14 provides a ridgeline mode control 330, i.e., pilot produced on/off control signal, to the ridgeline function 328. When the ridgeline mode control 330 indicates need to produce a ridgeline display, ridgeline function 328 collects terrain data 332 from the system cache 60a and collects aircraft position, heading, pitch and roll data 160 from the integrated NAV function 140. Based on the terrain elevation data 322 and the current aircraft position and orientation, ridgeline function 328 renders in the video signal 106 a three dimensional image of the surrounding terrain. Generally, the three dimensional image illustrates the terrain in front of the aircraft, the calculation being formed in the RID processor 40a, and changes in response to changes in aircraft position, heading, pitch and roll. The line drawing commands required to produce the ridgeline display are generated in the RID processor 40b and then passed by dual port (DP) memory to the TOE processor 28b. From the TOE processor 28b, the line drawing data is provided to the TAN processor 28a and then delivered to the video engine 98 for conversion from line drawing commands to display pixels.

The various data flow and function relationships illustrated in FIGS. 2-6 may be correlated to the architecture of FIG. 1 as follows. With reference to FIG. 2, the global positioning system (GPS) 144, inertial navigation unit (INU) 148, and radar altimeter (RALT) 152 all reside external of processor 10 and provide the data 142, 146, and 150 respectively, by way of aircraft bus 12, and then to TAN processor 28a by way of GPP dedicated bus 18. Integrated NAV function 140 is executed by TAN processor 28a. The terrain aided NAV function 154 is also executed by TAN processor 28a. The DTED elevation data 158 is taken from the system cache 60a, but originates from the digital memory unit 84.

In FIG. 3, the lateral and vertical steering control functions are executed primarily by TOE processor 28b. In particular, functions 170, 192, 212, 218, 222, 204, 196, 184, and 180 of FIG. 3 are executed by the TOE processor 28b. The integrated NAV function 140 of FIG. 3 is, as discussed above, executed by the TAN processor 28a. The mission route file 176 and obstacle file 200 reside on digital memory unit 84. Terrain elevation path manager 92, i.e., TOE processor 28b, accesses the system cache 60a by way of system cache bus 42. In this manner, the mission route data 190 taken from the terrain following function 170 may include a variety of information, such as terrain data applied to the terrain elevation path manager 192.

In FIG. 4, the threat avoidance function 240, intervisibility function 244, and mission replan function 250 are executed by the TAMI processor 40b. The horizontal steering function 180 and terrain avoidance warning function 186 are executed by the TOE processor 28b.

In FIG. 5, the map function 300 is executed by the general purpose processor (GPP) 16a and the components on card 90, i.e., by the DSM processor 90a and OLP processor 90b. Electronic order of battle threat file 302 and mission route file 176 are made available by the ICDE block 70a. Generally, this data is placed in the OLP processor 90b by way of the DSM processor 90a interacting directly with the ICDE block 70a by way of DSM dedicated bus 20. The terrain look ahead manager 306 is provided by the TAMI processor 40b. The display look ahead manager 310 and disk manager 312 are executed by the DSM processor 90a. In FIG. 6, system cache 60a and integrated NAV function 140, i.e., TAN processor 28a, deliver the terrain data 332 and aircraft data 160, respectively, to the ridgeline function 328 as implemented in the RID processor 40a. The RID processor 40a has access to the video engine 96 by way of the overlay processor 90b.

The covert flight data processor 10 shown and described herein may be further augmented by use of optimized methods of covert flight functionality. The present application is designated as related to a collection of co-pending U.S. patent applications, each describing improved forms of covert flight mission functions. The related co-pending present detailed description of methods for accessing an intervisibility cache in executing a radial scan pattern in support of an intervisibility calculation, a method for executing intervisibility calculation relative to an intervisibility cache, an implementation for the intervisibility processor of FIG. 1, a method for transforming digital terrain elevation data to reveal areas of low observability and to identify terrain associated with low level flight risk. While the integration and direct coupling between various covert flight functions provided by the architecture of flight data processor 10 as shown and described herein improves overall covert flight performance, such performance can be further improved by incorporating the above-noted optimized forms of such covert flight functions as described in the related co-pending applications.

Thus, an integrated covert flight data processor has been shown and described. Integrated coupling of various covert mission functions improves covert mission results. The integrated covert flight data processor better handles massive volumes of data in orchestrating various flight and terrain calculations and display functions by providing specific interconnections between selected covert flight mission functions to support an overall increase in productivity and, therefore, opportunity to achieve covert mission goals in escaping hostile territory undetected.

## Claims

1. A flight data processor for an aircraft including an aircraft bus (12) carrying aircraft status and command data, said flight data processor (10) comprising:
a) a plurality of integrated flight control and information display components interconnected by channels of communication among said components,
b) a digital memory means containing mission information (176);
c) navigation means (140) for the aircraft which provides aircraft position information; and
d) a map display system (300) which receives the mission information from said digital memory means (84) and produces map data as a function of the aircraft position information wherein said map display system (300) converts the map data to a visual image,
**characterized in that ;**
e) said flight data processor further comprises a covert flight support system receiving the aircraft position information and producing real time covert flight data comprised of intervisibility data calculated during flight of the aircraft representing areas obscured from view relative to any known and detected threats;
f) said covert flight data is calculated from the aircraft position information, local terrain conditions as represented by the mission information, and known and detected threats as recorded in the mission information and as reported by said aircraft by way of said aircraft bus (12); wherein
g) said covert flight data is applied to an aircraft flight control function placing aircraft control commands on said aircraft bus (12) to affect an aircraft flight path as a function of said real time covert flight data and said designated aircraft position.

2. The flight processor according to Claim 1, **characterized in that** said digital memory means is comprised of:
a) at least one cache memory (70b) integral to said flight data processor; and
b) an external mass storage unit (84) coupled to said at least one cache memory for delivering the mission information to said at least one cache memory for access therein by said map display system and said covert flight support system.

3. The flight data processor according to Claim 1 or 2, **characterized in that** said navigational means is an integrated navigational device collecting a plurality of aircraft position datums and calculating said designated aircraft position as a consensus of said plurality of aircraft position datums.

4. The flight data processor according to Claim 3, **characterized in that** said plurality of aircraft position datums are collected by way of said aircraft bus (12) and include at least one of a global position system datum based on received satellite transmission, an inertial navigational unit datum based on a gyroscopic instrument, and a radar altimeter datum based on a radar detected aircraft altitude.

5. The flight data processor according to one of the preceding claims, **characterized in that** said real time covert flight data is visually displayed in coordination with said map data.

6. The flight data processor according to one of the preceding claims, **characterized in that** said covert flight data is applied to an aircraft flight control function placing aircraft control commands on said aircraft bus (12) to affect an aircraft flight path as a function of said covert flight data and the aircraft position.

7. The flight data processor according to Claim 6, **characterized in that** functions of said aircraft flight control include vertical terrain following, lateral terrain avoidance, threat avoidance, and mission route replanning.

8. The flight data processor according to one of the preceding claims, **characterized in that** said flight data processor includes aircraft sensor control directing aircraft sensors to collect terrain data along an anticipated flight route and utilizing said collected sensor data in coordination with the mission data.

## Patentansprüche

1. Flugdatenprozessor für ein Flugzeug, umfassend einen Flugzeugbus (12) zum Führen von Flugzeugstatus- und Anweisungsdaten, wobei der Flugdatenprozessor (10) umfaßt:
a) mehrere integrierte Flugsteuer- und Informationsanzeigekomponenten, die durch Dialogkanäle zwischen den Komponenten verbunden sind,
b) eine digitale Speichereinrichtung mit Missionsinformation (176);
c) eine Navigationseinrichtung für das Flugzeug, welche Flugzeug-Positionsinformation liefert; und
d) ein Karten-Anzeigesystem (300), welches die Missionsinformation von der digitalen Speichereinrichtung (84) empfängt und Kartendaten als eine Funktion der Flugzeug-Positionsinformation erzeugt, wobei das Karten-Anzeigesystem (300) die Kartendaten in ein visuelles Bild umwandelt,
**dadurch gekennzeichnet,** daß
e) der Flugdatenprozessor ferner ein verdecktes Flug-Stützsystem umfaßt, das die Flugzeug-Positionsinformation empfängt und verdeckte Echtzeit-Flugdaten erzeugt, die Unsichtbarkeitsdaten umfassen, die während des Fluges des Flugzeuges berechnet werden und Bereiche repräsentieren, die von der Sicht in bezug auf irgendwelche bekannten und festgestellten Bedrohungen abgedeckt sind;
f) wobei die verdeckten Flugdaten berechnet werden aus der Flugzeug-Positionsinformation, örtlichen Terrainbedingungen, wie sie durch die Missionsinformation repräsentiert werden und bekannte und festgelegte Bedrohungen, wie sie in der Missionsinformation aufgezeichnet und durch das Flugzeug mittels des Flugzeugbusses (12) berichtet werden; wobei
g) die verdeckten Flugdaten einer Flugzeug-Flugsteuerfunktion zugeführt werden, die Flugzeug-Steueranweisungen an den Flugzeugbus (12) anlegt, um eine Flugzeug-Flugstrecke als eine Funktion der verdeckten Echtzeit-Flugdaten und der festgelegten Flugzeugposition zu bewirken.

2. Flugdatenprozessor nach Anspruch 1 **dadurch gekennzeichnet,** daß die digitale Speichereinrichtung umfaßt:
a) wenigstens einen mit dem Flugdatenprozessor integralen Pufferspeicher (70b); und
b) eine externe Massenspeichereinheit (84), die an den wenigstens einen Pufferspeicher angeschlossen ist, um die Missionsinformation an den wenigstens einen Pufferspeicher abzugeben für den Zugriff durch das Karten-Anzeigesystem und das verdeckte Flug-Stützsystem.

3. Flugdatenprozessor nach Anspruch 1 oder 2, **dadurch gekennzeichnet,** daß die Navigationseinrichtung eine integrierte Navigationseinrichtung ist, die mehrere Flugzeug-Positionsdaten sammelt und die festgelegte Flugzeugposition in Übereinstimmung der mehreren Flugzeug-Positionsdaten berechnet.

4. Flugdatenprozessor nach Anspruch 3, **dadurch gekennzeichnet,** daß die mehreren Flugzeug-Positionsdaten mittels des Flugzeugbusses (12) gesammelt werden und umfassen wenigstens ein Datum eines globalen Poisitionssystemes, das auf empfangener Satellitenübertragung beruht, ein Datum einer inertialen Navigationseinheit, das auf einem Kreiselinstrument beruht und ein Datum eines Radar-Höhenmessers, das auf einer durch Radar festgestellten Flugzeughöhe beruht.

5. Flugdatenprozessor nach einem der vorangehenden Ansprüche, **dadurch gekennzeichnet,** daß die verdeckten Echtzeit-Flugdaten visuell zusammen mit den Kartendaten dargestellt werden.

6. Flugdatenprozessor nach einem der vorangehenden Ansprüche, **dadurch gekennzeichnet,** daß die verdeckten Flugdaten einer Flugzeug-Flugsteuerfunktion zugeführt werden, die Flugzeug-Steueranweisungen an den Flugzeugbus (12) anlegt, um eine Flugzeug-Flugstrecke als eine Funktion der verdeckten Flugdaten und der Flugzeugposition zu bewirken.

7. Flugdatenprozessor nach Anspruch 6, **dadurch gekennzeichnet,** daß Funktionen der Flugzeug-Flugsteuerung eine vertikale Terrainverfolgung, eine seitliche Terrainvermeidung, eine Bedrohungsvermeidung und eine Neuplanung der Missionsroute umfassen.

8. Flugdatenprozessor nach einem der vorangehenden Ansprüche, **dadurch gekennzeichnet,** daß der Flugdatenprozessor eine Flugleug-Sensorsteuerung umfaßt, die die Flugzeugsensoren anweist, Terraindaten entlang einer angenommenen Flugroute zu sammeln und die gesammelten Sensordaten zusammen mit den Missionsdaten zu verwenden.

## Revendications

1. Unité de traitement de données pour un avion comprenant un bus d'avion (12) assurant le transfert des données d'état et de commande d'avion, ladite unité de traitement de données de vol (10) comprenant:
a) une pluralité de composants de commande de vol et d'affichage d'informations intégrés, interconnectés par des canaux de communication entre lesdits composants;
b) un moyen formant mémoire numérique contenant des informations de mission (176);
c) un moyen de navigation (140) pour l'avion qui délivre les informations de position d'avion; et
d) un dispositif d'affichage de carte (300) qui reçoit les informations de mission dudit moyen formant mémoire numérique (84) et produit des données de carte en fonction des informations de position d'avion, dans laquelle ledit dispositif d'affichage de carte (300) convertit les données de carte en une image visible,
caractérisée en ce que;
e) ladite unité de traitement de données de vol comprend, en outre, un dispositif support de couverture de vol recevant les informations de position d'avion et produisant des données de couverture de vol en temps réel constituées de données de visibilité par transparence calculées pendant le vol de l'avion, représentant des zones dont la vue est obscurcie par rapport à des menaces connues et détectées quelconques;
f) lesdites données de couverture de vol sont calculées à partir d'informations de position d'avion, de conditions locales de terrain telles que représentées par les informations de mission, et de menaces connues et détectées telles qu'enregistrées dans les informations de mission et telles que transmises par ledit avion au moyen dudit bus d'avion (12); dans laquelle
g) lesdites données de couverture de vol sont appliquées à une fonction de commande de vol d'avion plaçant des instructions de commande d'avion sur ledit bus d'avion (12) afin d'affecter un plan de vol d'avion en fonction desdites données de couverture de vol en temps réel et de ladite position d'avion théorique.

2. Unité de traitement de vol selon la revendication 1, caractérisée en ce que ledit moyen formant mémoire numérique est constitué par:
a) au moins une mémoire formant antémémoire (70b) intégrée dans ladite unité de traitement de données de vol; et
b) une unité formant mémoire de masse externe (84) couplée à ladite au moins une mémoire formant antémémoire afin de délivrer les informations de mission à ladite au moins une mémoire formant antémémoire dont l'accès peut être obtenu par ledit dispositif d'affichage de carte et ledit dispositif support de couverture de vol.

3. Unité de traitement de données de vol selon la revendication 1 ou 2, caractérisée en ce que ledit moyen de navigation est un dispositif de navigation intégré collectant une pluralité de données de référence de position d'avion et calculant ladite position d'avion théorique comme un compromis entre ladite pluralité de données de position d'avion.

4. Unité de traitement de données de vol selon la revendication 3, caractérisée en ce que ladite pluralité de données de référence de position d'avion est collectée au moyen dudit bus d'avion (12) et comprend au moins des données de référence de système de positionnement global basées sur des transmissions reçues par satellite, des données de référence d'unité de navigation inertielle basées sur un instrument gyroscopique et des données de référence d'altimètre radar basées sur une altitude d'avion détectée par radar.

5. Unité de traitement de données de vol selon l'une des revendications précédentes, caractérisée en ce que lesdites données de couverture de vol en temps réel sont affichées visuellement de manière coordonnée avec lesdites données de carte.

6. Unité de traitement de données de vol selon l'une des revendications précédentes, caractérisée en ce que lesdites données de couverture de vol sont appliquées à une fonction de commande de vol d'avion plaçant des instructions de commande d'avion sur ledit bus d'avion (12) afin d'affecter un plan de vol d'avion en fonction desdites données de couverture de vol et de la position d'avion.

7. Unité de traitement de données de vol selon la revendication 6, caractérisée en ce que les fonctions de ladite commande de vol d'avion comprennent le suivi vertical de terrain, l'évitement latéral de terrain, l'évitement de menace et la re-programmation d'itinéraire de mission.

8. Unité de traitement de données de vol selon l'une des revendications précédentes, caractérisée en ce que ladite unité de traitement de données de vol comprend un dispositif de commande de capteur d'avion amenant des capteurs d'avion à collecter des données de terrain le long d'un itinéraire de vol anticipé et utilisant lesdites données de capteur collectées de manière coordonnée avec les données de mission.
